# EUROPEAN PATENT SPECIFICATION

(11) **EP 2 837 477 B1**
(45) Date of publication and mention of the grant of the patent: **28.11.2018**
(21) Application number: 13775017.0
(22) Date of filing: 11.04.2013
(51) Int. Cl.: B28C 5/42, B01F 7/02, B01F 7/08, B01F 13/00, B01F 15/00, B01F 15/02, B60P 1/28, B60P 3/16

(54) **TIPPING DEVICE FOR QUICKLY MIXING AND UNLOADING CONCRETE**
KIPPVORRICHTUNG ZUM SCHNELLEN MISCHEN UND ENTLADEN VON BETON
EQUIPEMENT BASCULANT POUR MÉLANGER ET DÉCHARGER RAPIDEMENT DU BÉTON

(30) Priority: 12.04.2012 ES 201200400
(43) Date of publication of application: 18.02.2015
(73) Proprietor: Gicalla S.A., 28850 Torrejon de Ardoz (Madrid) (ES)
(72) Inventor: SAVALL PALACIO, Carlos, 03007 Alicante (ES); SAVALL PALACIO, Andres, 03007 Alicante (ES)
(74) Representative: Pons
(86) International application number: PCT/ES2013/000090
(87) International publication number: WO 2013/153242

(56) References cited:
- FR-A- 1 343 294
- GB-A- 338 961
- GB-A- 994 649
- GB-A- 994 649
- JP-A- H05 208 412
- US-A- 2 544 202
- US-A- 2 880 977
- US-A- 3 180 628
- US-A1- 2009 297 305

## Description

### Objective of the invention.-

The purpose of the present invention is to achieve a complete piece of equipment especially indicated to attach to conventional lorries, providing evident additional improvements to what is known as state-of-theart.

### Field of the invention.-

This invention is applied to the construction industry, in particular, civil engineering, as this sector requires the use of large amounts of concrete in short amounts of time.

### Technical background.-

When a large supply of concrete is needed quickly and in a short amount of time, conventional concrete lorry mixers present one main problem, which is that the lorry's concrete inlet and outlet to discharge the concrete are too small. This characteristic means that the loading and discharging times are longer for the indicated needs.
To solve this problem, special equipment is made to transport concrete in the lorry. The invention in question is a tipping equipment with a large capacity bucket or tank that has a hydraulic rear trap-door to discharge the concrete. This equipment can be filled easily and quickly as it is completely open on top. Once the tank is filled with concrete, it is transported to the place where it will be discharged. By tilting the tank, the concrete is discharged through the hydraulic rear trap-door. The problems that this equipment presents are, on the one hand, that the concrete can set due to the fact that it remains static in the tank during transportation.

This can be worse in areas with hot climates. On the other hand, this equipment can only discharge concrete by means of tipping, as, due to the heavy weight that is transported, the stability of it can be seriously affected.

From the state of the art, document GB994649 describes a vehicle-mounted concrete agitator that has a tipping non-rotatable container body with one or two rotatable longitudinal shafts carrying paddles on arms of differing lengths. The shafts are rotated by a hydraulic motor and the body is tipped by hydraulic rams not depicted. The paddles can only agitate the concrete but do not contribute to unload the concrete from the agitator. In order to do that it is necessary for the container to tilt until emptying of the material is achieved.

Also known, document US3180628 which relates to agitator dump trucks and more particularly to such trucks having tiltably-mounted rear discharge bodies or drums with open tops. The truck has a tiltably mounted discharge body provided with an open top, a rounded bottom comprising an upwardly and rearwardly sloping portion which diminishes in radius towards a discharge opening at an upper portion of the body. It also comprises an agitator mechanism having a shaft which is rotatable in the body concentrically with the rounded bottom, this shaft being provided with blades or paddles arranged to sweep round the interior surface of the body during rotation of the shaft. Additionally it comprises a reversing-drive control means for reversing the direction of rotation of the agitator shaft for a selected period once a predetermined pressure-resistance to the rotation of the shaft is detected. The same technical problems are associated with both described documents of the state of the art and in this case it is also necessary to tilt the container to unload the material.

### Description of the invention.-

The invention consists of a tipping device for mixing and discharging concrete quickly according to claim 1. This equipment combines a quick concrete discharge process by means of an open tipping bucket with a special morphology: the front part is in the shape of a rectangular prism with curved angles to avoid vertexes and lower edges, combined with a design of the rear part in the shape of a semitruncated cone, becoming narrower towards the hydraulic discharge trapdoor. This delays the setting of the concrete thanks to the incorporation of a mixing and discharge mechanism inside the loading bucket, and the incorporation of an aluminium hydraulic cover on top.

The mixing and discharge mechanism has a spindle in an oblique position, to which helical fins have been welded serving as an endless screw. The diameter of these fins is variable, so that, in the front part (the part which is nearest to lorry's cabin), the helix has a larger radius, and it is reduced in the rear part.

The aforementioned spindle has two functions: on the one hand, it keeps the concrete in continuous movement during transportation avoiding it to set. The helical fins, moved by the oblique spindle, continuously stir the concrete moving it towards the rear where the hydraulic trap-door is. This trap-door will remain closed until the concrete needs to be discharged. The rotation speed can be regulated according to the function of the concrete type being transported.

The concrete recirculates on the lower and lateral part towards the base of the bucket, pushing the load at the rear towards the area where the helix is, avoiding the concrete to solidify. It is then constantly re-entering the forced movement of the mixing combination, achieving a continuous and homogeneous mix during transportation.

On the other hand, once the lorry is positioned where the concrete needs to be discharged, the discharging trap-door is opened by hydraulic drive, and the rotation speed is adjusted to each case, proceeding, then, to the extraction and discharge of the concrete without the need of tipping. Once the helical fins are not able to extract any more concrete (in this manner almost 70% of the total load is extracted), the following procedure is to tip the tank to discharge the remaining concrete, which will come through the same outlet. Due to the fact the tank is practically empty, the stability of the vehicle increases.

With regard to filling the tank, this equipment has aluminium covers on top that, by means of hydraulic drive, completely open to introduce the concrete from a loading hopper at a concrete mixing plant. In this sense, the concrete can be introduced at the maximum speed that said hopper can discharge, as it does not depend on the rotation of the bucket as in conventional concrete lorry mixers.

Once the tank, or the pear-shaped bucket, is loaded, the aluminium covers are closed so that the concrete is covered during transportation.

### Description of the images.-

To complement the description, and to make comprehension of the invention's characteristics easier, several drawings accompany this present descriptive report. In a descriptive and non-limitative manner, the following has been represented:

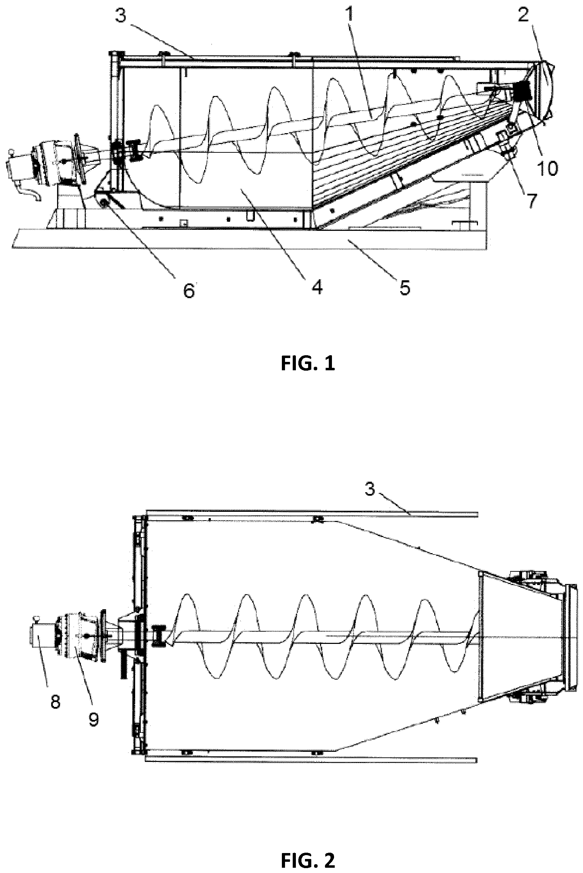

Figure 1 shows the lateral part of the equipment, where the following is highlighted:
   1) Spindle with helical fins
   2) Rear hydraulic trap-door
   3) Covers on top with hydraulic drive
   4) Pear-shaped bucket or tank for tipping
   5) Auxiliary superstructure frame
   6) Hydraulic cylinder for tipping
   7) Tipping point of the bucket
   8) Hydraulic motor
   9) Gearbox
   10) Rear spindle support
Figure 2 shows the equipment from above with the covers open (3).

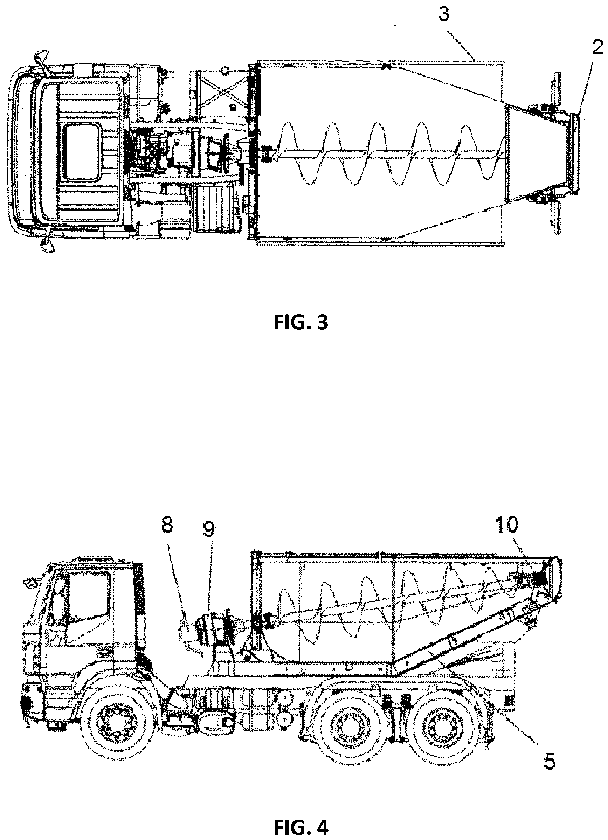

Figures 3 and 4 respectively show the lateral part and the above view of the equipment assembled on a lorry.

### Preferential completion of the invention.-

As observed in figure 1, the invention concerns a tipping equipment for mixing and discharging concrete quickly configured to be attached to lorries. The equipment is attached to the lorry by means of a superstructure consisting of an auxiliary frame (5) supporting the bucket or tank. The rear part of this frame is in the shape of a wedge, allowing it to tilt with regard to a point located at a higher position (7). In addition, on the lower part of the inside the bucket, there is a hydraulic vibrator used to prevent the concrete from sticking to the walls during transportation.
The driving devices of the tipping system (6) and the spindle moving system with helical fins (8) are completely independent.
The described rotational helix, formed by a spindle and a set of helical fins (1) welded to it with a variable radius can be disassembled. On the lower part (where the fins are larger), the spindle has an ending in the shape of an annulus with spaces to insert screws. On the top part, closest to the rear discharge trap-door, the spindle has an ending with a smaller diameter than the rest to tightly attach the rear support (10) fixed to the loading bucket or tank.
The lorry, to which the equipment will be attached, must have power takeoff, similar to Multipower, which will act as a hydraulic pump by means of a Cardan joint shaft.

This pump will inject with pressure the oil through a rigid pipeline system arranged along the auxiliary frame (5) and the base of the loading bucket up to the hydraulic motor (9) attached to the gearbox (10). This then produces a rotational movement of the main spindle of the system with a special connection plate. Before returning to the deposit, the oil is passed through a heat exchanger by forced air in order to cool it.
Optionally, to improve the stability of the vehicle when discharging concrete on unstable ground and/or to elevate the unloading point, there are stabilizers or supports at the rear of the lorry joined to the chassis. This allows the vehicle to lift 32 tonnes to a maximum height of 500mm.

## Claims

1. Tipping device for quickly mixing and unloading concrete configured to be attached to a lorry comprising a tipping bucket or tank (4) configured to receive concrete and which has a special morphology having the front part in the shape of a rectangular prism with curved angles, and the rear part in the shape of a semi-truncated cone that becomes narrower towards a hydraulic discharge trap-door (2), and including:
- a mixing-discharging mechanism on the inside of said tank (4) comprising a spindle (1) disposed in an oblique position and having helical fins welded to it to be used as an endless screw, the spindle (1) having a larger radius in its front part which is placed nearest to the cabin of the lorry when the tipping device is attached to a lorry, and the radius of the spindle (1) becomes narrower towards its rear part, and
- hydraulic aluminium covers on top (3).

2. Tipping device for quickly mixing and unloading concrete according to claim 1 wherein the hydraulic trap-door at the rear (2) is configured to be closed until the concrete of the tipping bucket or tank (4) is discharged.

3. Tipping device for quickly mixing and unloading concrete according to claim 1 wherein it further comprises an independent hydraulic cylinder (6) for tipping an auxiliary frame (5) incorporated in the bucket or tank (4).

## Patentansprüche

1. Kippvorrichtung zum schnellen Mischen und Entladen von Beton, die dazu ausgebildet ist, um an einem Lastkraftwagen befestigt zu werden, umfassend eine Kippschaufel oder einen Tank (4), die oder der zur Aufnahme von Beton ausgebildet ist, und eine besondere Morphologie aufweist, die den vorderen Teil in Form eines rechteckigen Prismas mit gekrümmten Winkeln und den hinteren Teil in Form eines halbstumpfen Kegels, der sich zu einer hydraulischen Ablaufklappe (2) hin verjüngt, aufweist, und folgendes beinhaltet:
- einen Misch-Ablaufmechanismus an der Innenseite des Tanks (4), der eine Spindel (1) umfasst, die in einer schrägen Position angeordnet ist und mit spiralförmigen Rippen verschweißt ist, um als Schnecke verwendet zu werden, wobei die Spindel (1) einen größeren Radius in ihrem vorderen Teil aufweist, der der Kabine des Lastkraftwagens am nächsten liegt, wenn die Kippvorrichtung an einem Lastkraftwagen befestigt ist, und sich der Radius der Spindel (1) zu ihrem hinteren Teil verjüngt, und
- hydraulische Aluminiumabdeckungen an der Oberseite (3).

2. Kippvorrichtung zum schnellen Mischen und Entladen von Beton nach Anspruch 1, wobei die hydraulische Klappe auf der Rückseite (2) so ausgebildet ist, dass sie geschlossen ist, bis der Beton der Kippschaufel oder des Tanks (4) entladen wird.

3. Kippvorrichtung zum schnellen Mischen und Entladen von Beton nach Anspruch 1, wobei sie ferner einen unabhängigen Hydraulikzylinder (6) zum Kippen eines in der Schaufel oder in dem Tank (4) integrierten Hilfsrahmens (5) umfasst.

## Revendications

1. Dispositif de basculement pour le malaxage et le déversement rapide de béton configuré pour être relié à un camion comprenant une benne ou cuve à basculement (4) configurée pour recevoir du béton et qui a une morphologie particulière ayant la partie avant sous la forme d'un prisme rectangulaire avec des angles incurvés, et la partie arrière sous la forme d'un cône semi-tronqué qui devient plus étroit vers une trappe de déchargement hydraulique (2), et comportant :
- un mécanisme de malaxage-déchargement à l'intérieur de ladite cuve (4) comprenant une broche (1) disposée dans une position oblique et ayant des ailettes hélicoïdales soudées à cette dernière destinées à être utilisées comme une vis sans fin, la broche (1) ayant un rayon plus large sur sa partie avant qui est placée le plus proche de la cabine du camion lorsque le dispositif de basculement est relié à un camion, et le rayon de la broche (1) devient plus étroit vers sa partie arrière, et
- des capots hydrauliques en aluminium sur la partie supérieure (3).

2. Dispositif de basculement pour le malaxage et le déversement rapide de béton selon la revendication 1 dans lequel la trappe hydraulique à l'arrière (2) est configurée pour être fermée jusqu'à ce que le béton de la benne ou cuve à basculement (4) soit déversé.

3. Dispositif de basculement pour le malaxage et le déversement rapide selon la revendication 1 dans lequel il comprend en outre un vérin hydraulique indépendant (6) pour le basculement d'un châssis auxiliaire (5) incorporé dans la benne ou cuve (4).
